# EUROPEAN PATENT APPLICATION

(11) **EP 4 431 946 A1**
(43) Date of publication of application: **18.09.2024**
(21) Application number: 22892601.0
(22) Date of filing: 27.10.2022
(51) Int. Cl.: G01N 35/00, B01D 61/00, B01D 63/00, B01D 63/02, B01D 71/26, C02F 1/20

(54) **AUTOMATIC ANALYSIS DEVICE AND AUTOMATIC ANALYSIS METHOD**

(30) Priority: 09.11.2021 JP 2021182447
(71) Applicant: DIC Corporation, Tokyo 174-8520 (JP)
(72) Inventor: KOBAYASHI Atsuo, Ichihara-shi, Chiba 290-8585 (JP); OI Kazumi, Ichihara-shi, Chiba 290-8585 (JP); SUGANUMA Youhei, Ichihara-shi, Chiba 290-8585 (JP)
(74) Representative: TBK
(86) International application number: PCT/JP2022/040064
(87) International publication number: WO 2023/085101

(57) **Abstract**

There are provided a hollow fiber degassing module that is superior in chemical resistance and allows for reduced contamination even in extended use in the degassing of constant temperature water, the automatic analysis device that includes it, a (bio)chemical analysis method in which this automatic analysis device is used, and a method for degassing the constant temperature water. To be more exact, an automatic analysis device that carries out chemical analysis or biochemical analysis of a specimen, a (bio)chemical analysis method in which this automatic analysis device is used, and a method for degassing the constant temperature water include a constant temperature tank for maintaining a test tube containing the specimen within a certain temperature range and a degassing portion including a hollow fiber degassing module for removing dissolved gases contained in constant temperature water in the constant temperature tank, the degassing module including hollow fiber membranes. The material for the hollow fiber membranes is a polyolefin resin or fluoropolymer.

## Description

### Technical Field

The present invention relates to an automatic analysis device that carries out chemical analysis or biochemical analysis of a specimen (hereinafter, "chemical analysis or biochemical analysis" is referred to as "(bio)chemical analysis"). To be more exact, the present invention relates to a device, for chemical analysis or biochemical analysis of a specimen, that includes a degassing module having at least one hollow fiber membrane and a mechanism for creating negative pressure outside or inside the hollow fiber membrane and thereby separating only gas from a liquid through the wall surfaces of the hollow fiber while the liquid passes through the inside or outside of the hollow fiber membrane (hereinafter referred to as a "hollow fiber degassing module") and a method for it.

### Background Art

Automatic chemical analysis devices employ degassed water as constant temperature water in a reactor. This is because bubble formation caused by dissolved oxygen, for example, in the constant temperature water adversely affects the accuracy of analytical data.

Known automatic chemical analysis devices have a main component, which carries out (bio)chemical analysis of a specimen, and a degasser and a water purifier disposed outside this main component. Purified water produced at the water purifier is delivered to the degasser, degassed there, and then delivered to the main component. The degasser employed is one that heats the purified water to 80°C or above. In certain cases, however, the temperature of the purified water (degassed water) used at the main component is approximately 37°C, preventing direct delivery of the heated degassed water, which is at 80°C or above, to the main component. Because of this, the devices incorporate a cooling means and a degassed water reservoir for storing cooled degassed water inside the degasser, and the degassed water in this degassed water reservoir is delivered to the main component as needed. Such a device, however, is inevitably bulky and also has the drawback of frequent decreases in the degree of degassing because the degassed water generated by this water purifier is left inside the degassed water reservoir.

To address this, a device has been proposed with the aim of making the entire system compact and preventing the decrease in the degree of degassing of the degassed water in the degassed water storage tank (PTL 1). At a degassing portion configured with a preheating tank as its central element, purified water introduced from the outside is heated to a temperature slightly higher than the temperature during its actual use and maintained at that temperature. As a result, the removal of dissolved gases in the purified water becomes possible. With this method, however, high-speed operation of the system can be adequately successful only with a storage tank for reserving a large quantity of degassed water; the demand for a reduced size of the entire system cannot be met.

To address this need for high-speed operation of the system, the utilization of a degassing module has been proposed (PTL 2). This degassing module is made up of silicone-resin hollow fiber membranes and has a mechanism for creating negative pressure outside the hollow fiber membranes and thereby separating only gas from a liquid through the wall surfaces of the hollow fibers while the liquid passes through the inside of the hollow fiber membranes.

### Citation List

### Patent Literature

PTL 1: Japanese Unexamined Patent Application Publication No. 63-165761
PTL 2: WO Pamphlet No. 2020/261659

### Summary of Invention

### Technical Problem

A degassing module made up of silicone-resin hollow fiber membranes, however, is susceptible to degradation from chemicals used to wash it, acids and alkalis in particular. Contaminants that appear to be from degraded material, furthermore, can contaminate during extended use. Prolonged use of this automatic analysis device, therefore, tends to adversely affect the accuracy of analytical data due to the accumulation of contaminants in the constant temperature water on the surface of the vessel.

A problem to be solved by the present invention, therefore, lies in providing a hollow fiber degassing module that is superior in chemical resistance and allows for reduced contamination even in extended use in the degassing of the constant temperature water, the automatic analysis device that includes it, and a (bio)chemical analysis method in which this automatic analysis device is used. A problem to be solved by the present invention, furthermore, lies in providing a method for degassing the constant temperature water with which the need for high-speed (bio)chemical analysis of a specimen can be addressed and that is superior in chemical resistance and allows for reduced contamination even in extended use.

### Solution to Problem

The inventors found that the above problems can be solved by using a particular material in the portions of the hollow fiber degassing module that come into contact with the water.

That is, the present invention relates to:
an automatic analysis device that carries out chemical analysis or biochemical analysis of a specimen, the device including:
a constant temperature tank for maintaining a test tube containing the specimen within a certain temperature range and a degassing portion including a hollow fiber degassing module for removing a dissolved gas contained in constant temperature water in the constant temperature tank, wherein:
the hollow fiber degassing module includes at least one hollow fiber membrane; and
a material for the hollow fiber membrane is a polyolefin resin or fluoropolymer.

The present invention, furthermore, relates to:
a hollow fiber degassing module included in an automatic analysis device that carries out chemical analysis or biochemical analysis of a specimen and
used exclusively to remove a dissolved gas contained in constant temperature water in a constant temperature tank for maintaining a test tube containing the specimen within a certain temperature range, wherein:
   the hollow fiber degassing module includes at least one hollow fiber membrane; and
   a material for the hollow fiber membrane is a polyolefin resin or fluoropolymer.

Moreover, the present invention relates to:
a method for removing, in an automatic analysis device that carries out chemical analysis or biochemical analysis of a specimen,
a dissolved gas contained in constant temperature water in a constant temperature tank for maintaining a test tube containing the specimen within a certain temperature range, wherein:
   the hollow fiber degassing module includes at least one hollow fiber membrane; and
   a material for the hollow fiber membrane is a polyolefin resin or fluoropolymer.

### Advantageous Effects of Invention

According to the present invention, there can be provided a hollow fiber degassing module that allows for reduced contamination even in extended use in the degassing of the constant temperature water, the automatic analysis device that includes it, and a (bio)chemical analysis method in which this automatic analysis device is used. According to the present invention, furthermore, there can be provided a method for degassing the constant temperature water with which the need for high-speed (bio)chemical analysis of a specimen can be addressed and that allows for reduced contamination even in extended use.

### Brief Description of Drawings

[Fig. 1] Fig. 1 is a conceptual view illustrating an example of an automatic analysis device of the present invention.
[Fig. 2] Fig. 2 is a schematic cross-sectional view of an external-perfusion hollow fiber degassing module according to the present invention.
[Fig. 3] Fig. 3 is a schematic view of an external support for a hollow fiber membrane bundle used in the present invention.
[Fig. 4] Fig. 4 is a schematic cross-sectional view in which part of the potting portion of a hollow fiber degassing module used in the present invention is enlarged.
[Fig. 5] Fig. 5 is a schematic cross-sectional view in which part of the potting portion of a hollow fiber degassing module used in the present invention is enlarged.
[Fig. 6] Fig. 6 is a schematic cross-sectional view of an internal-perfusion hollow fiber degassing module according to the present invention.
[Fig. 7] Fig. 7 is a schematic cross-sectional view in which part of the potting portion of a hollow fiber degassing module used in the present invention is enlarged.
[Fig. 8] Fig. 8 is a schematic cross-sectional view of an external-perfusion hollow fiber degassing module according to the present invention.
[Fig. 9] Fig. 9 is a conceptual view illustrating an embodiment of a hot-water circulating reactor in an automatic analysis device to which the present invention is applied.
[Fig. 10] Fig. 10 is a conceptual view illustrating an embodiment of a hot-water circulating reactor in an automatic analysis device to which the present invention is applied.
[Fig. 11] Fig. 11 is a conceptual view illustrating an example of an automatic analysis device of the present invention.

### Description of Embodiments

The present invention will be described more specifically with examples.

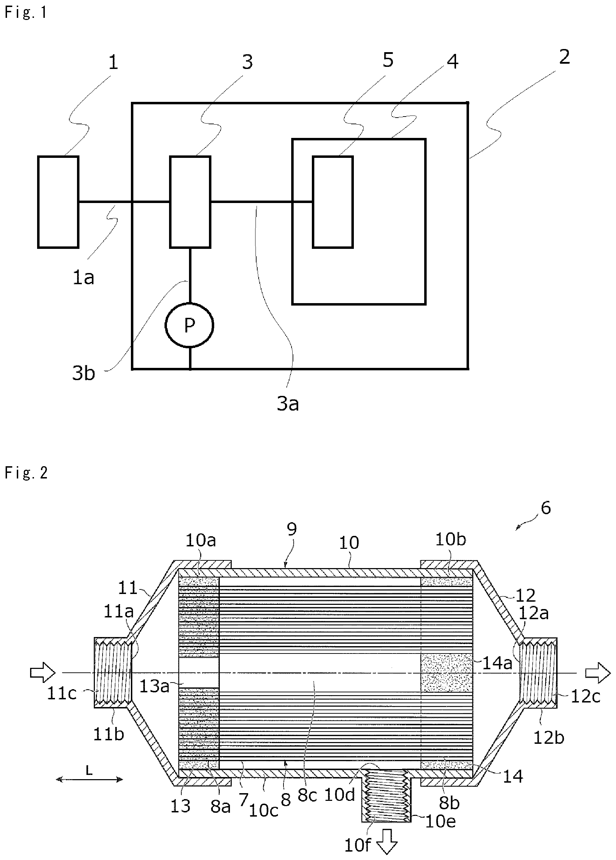

Fig. 1 is a conceptual view illustrating an example of the present invention. As illustrated in this drawing, an apparatus in this example includes a purified water generator 1 and an automatic analysis device 2. Inside the automatic analysis device 2, there are placed a degasser 3 that degasses constant temperature water taken therein from the purified water generator 1 and a reactor 5 within a (bio)chemical analysis section 4. The purified water generator 1, the degasser 3, and the reactor 5, furthermore, are interconnected by channels (1a and 3a). The degasser 3 is coupled to a vacuum pump via a suction tube 3b, and the purified water supplied from the purified water generator 1 to the degasser 3 is degassed through the operation of the vacuum pump to remove dissolved oxygen and bubbles therefrom. In addition, the apparatus may be configured in such a manner that the purified water degassed at the degasser 3 will be supplied to the reactor (constant temperature tank) 5. Alternatively, as described later herein, the apparatus may be configured in such a manner that the degasser 3 and the reactor 5 will form a circulation path and that the purified water degassed at the degasser 3 will be supplied to this circulation path.

The degasser 3 is configured with a hollow fiber degassing module as its central element. The hollow fiber degassing module includes a hollow fiber membrane bundle in which multiple hollow fiber membranes have been bundled together in the shape of a bamboo blind with the warp, a housing in which the hollow fiber membrane bundle is housed, and a potting portion that seals the end portions of the hollow fiber membrane bundle.

### (First Embodiment Relating to a Hollow Fiber Degassing Module)

Fig. 2 is a schematic cross-sectional view of an external-perfusion hollow fiber degassing module according to the present invention. The external-perfusion hollow fiber degassing module 6, when configured as an external perfusion type, degasses constant temperature water by suppling the constant temperature water to the outside of hollow fiber membranes 7 and reducing the pressure inside the hollow fiber membranes 7 at the same time.

The hollow fiber membranes 7 are membranes in hollow fiber form permeable to gases but impermeable to liquids. The material, shape, form, etc., of the hollow fiber membranes 7 are not particularly restricted. For manufacturability, chemical resistance, and pollution resistance reasons, examples of materials for the hollow fiber membranes 7 include polyolefin resins, such as polypropylene and poly(4-methylpentene-1), and fluoropolymers, such as PTFE, amorphous fluoropolymers, tetrafluoroethylene-perfluoroalkyl vinyl ether copolymers (hereinafter also referred to as PFA), tetrafluoroethylene-hexafluoropropylene copolymers (hereinafter also referred to as FEP), tetrafluoroethylene-ethylene copolymers (hereinafter also referred to as ETFE), polychlorotrifluoroethylene (hereinafter also referred to as PCTFE), and polyvinylidene fluoride (hereinafter also referred to as PVDF). The amorphous fluoropolymers (hereinafter also referred to as "Teflon^{®} AFs") may be, more specifically, amorphous fluoropolymers containing a copolymer composed of tetrafluoroethylene and perfluoro-2,2-dimethyl-1,3-dioxole as comonomers. Examples of shapes (shapes of the side wall) of the hollow fiber membranes 7 include porous membranes, microporous membranes, and homogenous membranes having no porosity (nonporous membranes). Examples of forms of the hollow fiber membranes 7 include symmetric membranes (homogeneous membranes), which are homogeneous in terms of the chemical or physical structure of the entire membranes, and asymmetric membranes (heterogeneous membranes), which have different chemical or physical structures from portion to portion. An asymmetric membrane (heterogeneous membrane) is a membrane having a nonporous dense layer and porosity. In that case, the dense layer may have been formed anywhere in the membrane, such as the surface layer portion of the membrane or inside the porous membrane. Heterogeneous membranes also include composite membranes having different chemical structures and multilayer-structure membranes, such as three-layer-structure ones.

In particular, a heterogenous membrane made with materials including a poly(4-methylpentene-1) resin is preferred for the degassing of constant temperature water because it has a dense layer that blocks liquids. In the case of hollow fibers used in an external-perfusion degassing module, it is preferred that the dense layer have been formed on the outer surface of the hollow fibers.

The hollow fiber membrane bundle 8 can be formed as, for example, a sheet-shaped article in which multiple hollow fiber membranes 7 have been bundled together in the shape of a bamboo blind with the warp. In that case, the sheet-shaped article is rolled into a cylindrical shape to form a hollow fiber membrane bundle, and both end portions of the hollow fiber membrane bundle in the shape of a cylindrical roll are secured with a sealant. Through this, a hollow fiber degassing module 6 can be created. As for the material for the warp, polyolefin resins, such as polypropylene resins, fluoropolymers as listed above, and aromatic polyester resins, such as polycarbonate resins and polyethylene terephthalate, are preferred examples for manufacturability, chemical resistance, and pollution resistance reasons.

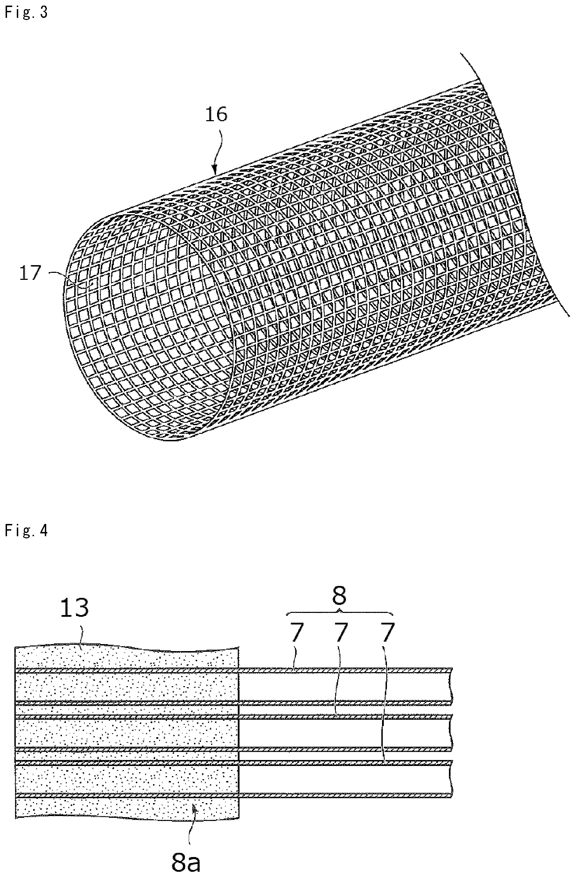

The hollow fiber membrane bundle in the shape of a cylindrical roll, furthermore, may be supported by wrapping the outer periphery of its circumference with an external support 16 (e.g., Fig. 3). As illustrated in Fig. 3, the external support 16 is a sheet shaped into a cylinder and may have water-permeable pores 17, such as ones like mesh holes or perforations, in the sheet. As for the material for the sheet of the external support 16, polyolefin resins, such as polypropylene resins, fluoropolymers as listed above, and aromatic polyester resins, such as polycarbonate resins and polyethylene terephthalate, are preferred examples for manufacturability, chemical resistance, and pollution resistance reasons. When an external support 16 is used, the hollow fiber membrane bundle 8 can be produced simply by forming a sheet-shaped article in which multiple hollow fiber membranes 7 have been bundled together in the shape of a bamboo blind with the warp, rolling this sheet-shaped article into a cylindrical shape to form a hollow fiber membrane bundle, then sheathing the bundle in the external support 16, and subsequently securing both end portions of the one-piece structure of the hollow fiber membrane bundle and the external support 16 with a sealant.

The housing 9 includes a cylinder 10, a first lid portion 11, and a second lid portion 12. The cylinder 10 is a section in which the hollow fiber membrane bundle 8 is housed. The cylinder 10 has been formed in a cylindrical shape extending in the axial direction L, and both end portions of the cylinder 10 are open. To a first opening end portion 10a of the cylinder 10, which is the opening end portion on one side of the cylinder 10, the first lid portion 11 has been attached, and to a second opening end portion 10b of the cylinder 10, which is the opening end portion on the other side, the second lid portion 12 has been attached. The attachment of the first lid portion 11 and the second lid portion 12 to the cylinder 10 can be achieved by, for example, screwing, interlocking, bonding, or welding. Although not illustrated, there may be a sealing portion, such as an O-ring, at the points at which the first lid portion 11 and the second lid portion 12 are attached to the cylinder 10. When the sealing portion is composed of an O-ring, the O-ring is preferably placed in a circular groove, for example, created in the first opening end portion 10a or second opening end portion 10b of the shell 10. The material for the sealing portion may be any material because this portion will not always be in contact with water but is for the prevention of leakage in the event of a fault in the attachment, for example by screwing, interlocking, bonding, or welding. However, polyolefin resins, such as polypropylene resins, fluoropolymers as listed above, and aromatic polyester resins, such as polycarbonate resins and polyethylene terephthalate, are preferred examples in light of pollution resistance in case of a fault.

The first lid portion 11 has been formed in a tapered shape, narrowing with distance from the cylinder 10. At the distal end portion of the first lid portion 11, there is a supply port 11a created for supplying constant temperature water into the first lid portion 11 through it. The supply port 11a, furthermore, is a round opening and may have been created somewhere along the central axis of the cylinder 10. From the supply port 11a, a joint 11b for detachably coupling a first constant temperature water supply tube 1a extends along the axial direction L. The joint 11b has been formed in a cylindrical shape, and the inner surface or outer periphery of the joint 11b has an internal screw or external screw 11c (in Fig. 2, illustrated as an internal screw) formed thereon for the first constant temperature water supply tube 1a to be screwed thereinto or thereover. It should be noted that the coupling between the joint 11b and the first constant temperature water supply tube 1a is not limited to screwing; for example, it may be achieved by interlocking.

The second lid portion has been formed in a tapered shape, narrowing with distance from the cylinder. As illustrated in Fig. 2, at the distal end portion of the second lid portion 12, there is a suction port 12a created for drawing gas from the inside of the housing 9 through it. The suction port 12a is a round opening and may have been created somewhere along the central axis of the cylinder 10. From the suction port 12a, a joint 12b for detachably coupling a suction tube (not illustrated) extends along the axial direction L. The joint 12b has been formed in a cylindrical shape, and the inner surface or outer periphery of the joint 12b has an internal screw or external screw 12c (in Fig. 2, illustrated as an internal screw) formed thereon for the suction tube 3b to be screwed thereinto or thereover. It should be noted that the coupling between the joint 12b and the suction tube is not limited to screwing; for example, it may be achieved by interlocking.

For the shell, as illustrated in Fig. 2, the side wall 10c of the cylinder 10 has a drain port 10d created for draining the constant temperature water from the inside of the housing 9. The drain port 10d is a round opening. The drain port 10d may have been created closer to the second opening end portion 10b than the middle in the direction L along the axis of the cylinder 10. From the drain port 10d, a joint 10e for detachably coupling a second constant temperature water supply tube 3a extends along the direction perpendicular to the axial direction L. The joint 10e has been formed in a cylindrical shape, and the inner surface or outer periphery of the joint 10e has an internal screw or external screw 10f (in Fig. 2, illustrated as an internal screw) formed thereon for the second constant temperature water supply tube 3a to be screwed thereinto or thereover. It should be noted that the coupling between the drain port 10d and the second constant temperature water supply tube 3a is not limited to screwing; for example, it may be achieved by interlocking.

As for the materials for the housing 9, cylinder 10, first lid portion 11, and second lid portion 12, polyolefin resins, such as polypropylene resins, and aromatic polyester resins, such as polycarbonate resins and polyethylene terephthalate, are preferred examples for manufacturability, chemical resistance, and pollution resistance reasons. In that case, the cylinder 10, first lid portion 11, and second lid portion 12 can be produced by injection molding.

Moreover, at a point closer to the first lid portion, a first membrane bundle end portion 8a of the hollow fiber membrane bundle 8 has been fastened to the first opening end portion 10a of the cylinder 10 by a potting portion 13, and at a point closer to the second lid portion, a second membrane bundle end portion 8b of the hollow fiber membrane bundle 8 has been fastened to the second opening end portion 10b of the cylinder 10 by a potting portion 14.

The potting portions 13 and 14 are formed preferably of, for example, a product of the curing of a curable resin composition containing an epoxy resin or (meth)acrylic resin or a polyolefin resin, such as polyethylene or polypropylene, for manufacturability, chemical resistance, and pollution resistance reasons.

To create a membrane bundle hollow portion 8c in the hollow fiber membrane bundle 8 and form the potting portions 13 and 14 at the same time, a sheet-shaped article in which multiple hollow fiber membranes 7 have been bundled together in the shape of a bamboo blind with the warp is, for example, wrapped around a cylindrical temporary core and thereby rolled into a cylindrical shape to form a hollow fiber membrane bundle, then the bundle is placed in a housing composed of the shell 10 and the first lid portion 11, one end portion of the hollow fiber membrane bundle in the shape of a cylindrical roll is secured with a sealant thereafter, and the temporary core is removed from this hollow fiber membrane bundle with its end portion secured as a potting portion. Then the second lid portion 12 is considered, and the other end portion is secured with a sealant poured through the drain port 10d. As a result, both end portions of the hollow fiber membrane bundle can be secured as potting portions. Through this, a hollow fiber degassing module 6 as illustrated in Fig. 2 can be created.

The potting portion 13 has been spread throughout the cross-section perpendicular to the direction L along the axis of the cylinder 10, excluding the membrane bundle hollow portion 8c. In other words, for the potting portion 13, the potting portion 13 has been spread between the hollow fiber membranes 7, inside the hollow fiber membranes 7, and between the hollow fiber membrane bundle 8 and the inner wall of the cylinder 10 (Fig. 4). The potting portion 13, furthermore, has a communication port 13a created for interconnecting the membrane bundle hollow portion 8c and the outside of the cylinder 10.

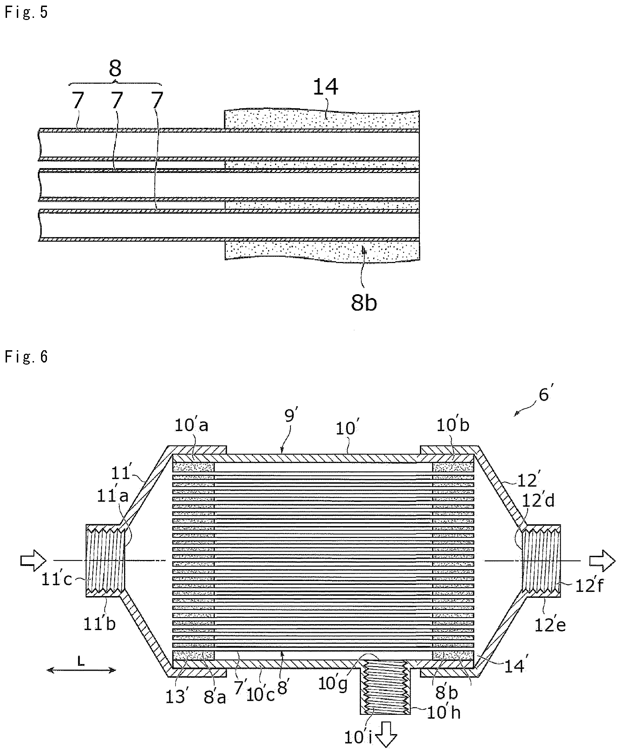

The potting portion 14 has been spread throughout the cross-section perpendicular to the direction L along the axis of the cylinder 10, excluding the inside of the hollow fiber membranes 7. In other words, the potting portion 14 has not been spread inside the hollow fiber membranes 7 and has been spread between the hollow fiber membranes 7, between the hollow fiber membrane bundle 8 and the inner wall of the cylinder 10, and in the membrane bundle hollow portion 8c (Fig. 5).

The constant temperature water supplied through the supply port 11a into the first lid portion 11, therefore, is directed into the cylinder 10 only through the communication port 13a and fed to the outside of the hollow fiber membranes 7 within the cylinder 10. The constant temperature water supplied to the cylinder 10, furthermore, is prevented from flowing beyond the potting portion 14 into the second lid portion 12 side. Moreover, since the inside of the hollow fiber membranes 7 and the inside of the second lid portion 12 are interconnected, drawing gas through the suction port 12a using a suction pump creates a reduced pressure inside the hollow fiber membranes 7. Consequently, while the constant temperature water passes between the hollow fiber membranes 7, dissolved gases and bubbles are extracted from the constant temperature water into the hollow fiber membranes 7, resulting in the degassing of the constant temperature water.

Overall, in the first embodiment, there is disclosed a case in which the portions of the hollow fiber degassing module that come into contact with the constant temperature water are primarily the shell 10, first lid portion 11, potting portions 13 and 14, and hollow fiber membranes 7. Using materials as specified above in these portions, furthermore, ensures that the hollow fiber degassing module will be superior in chemical resistance and allow for reduced contamination even in extended use in the degassing of the constant temperature water with it.

### (Second Embodiment Relating to a Hollow Fiber Degassing Module)

Fig. 6 is a schematic cross-sectional view of an internal-perfusion hollow fiber degassing module according to the present invention. The internal-perfusion hollow fiber degassing module 6' degasses constant temperature water by suppling the constant temperature water to the inside of hollow fiber membranes 7' and reducing the pressure outside the hollow fiber membranes 7' at the same time.

The hollow fiber membranes 7' are similar to the hollow fiber membranes 7 in the first embodiment.

The hollow fiber membrane bundle 8' can be formed as, for example, a sheet-shaped article in which multiple hollow fiber membranes 7' have been bundled together in the shape of a bamboo blind with the warp. In that case, the sheet-shaped article is rolled into a cylindrical shape to form a hollow fiber membrane bundle, and both end portions of the hollow fiber membrane bundle in the shape of a cylindrical roll are secured with a sealant. Through this, a hollow fiber degassing module 6' can be created. As for the material for the warp, polyolefin resins, such as polypropylene resins, fluoropolymers as listed above, and aromatic polyester resins, such as polycarbonate resins and polyethylene terephthalate, are preferred examples for manufacturability, chemical resistance, and pollution resistance reasons.

In addition, the hollow fiber membrane bundle in the shape of a cylindrical roll may be supported by wrapping the outer periphery of its circumference with an external support 16 (e.g., Fig. 3) as mentioned by way of example in the first embodiment.

The housing 9' includes a cylinder 10', a first lid portion 11', and a second lid portion 12'. The cylinder 10' is a section in which the hollow fiber membrane bundle 8' is housed. The cylinder 10' has been formed in a cylindrical shape extending in the axial direction L, and both end portions of the cylinder 10' are open. To a first opening end portion 10'a of the cylinder 10', which is the opening end portion on one side of the cylinder 10', the first lid portion 11' has been attached, and to a second opening end portion 10'b of the cylinder 10', which is the opening end portion on the other side, the second lid portion 12' has been attached. The attachment of the first lid portion 11' and the second lid portion 12' to the cylinder 10' can be achieved by, for example, screwing, interlocking, bonding, or welding.

The first lid portion 11' has been formed in a tapered shape, narrowing with distance from the cylinder 10'. At the distal end portion of the first lid portion 11', there is a supply port 11'a created for supplying constant temperature water into the first lid portion 11' through it. The supply port 11'a, furthermore, is a round opening and may have been created somewhere along the central axis of the cylinder 10'. From the supply port 11'a, a joint 11'b for detachably coupling a first constant temperature water supply tube 1a extends along the axial direction L. The joint 11'b has been formed in a cylindrical shape, and the inner surface or outer periphery of the joint 11'b has an internal screw or external screw 11'c (in Fig. 6, illustrated as an internal screw) formed thereon for the first constant temperature water supply tube 1a to be screwed thereinto or thereover. It should be noted that the coupling between the joint 11'b and the first constant temperature water supply tube 1a is not limited to screwing; for example, it may be achieved by interlocking.

The second lid portion has been formed in a tapered shape, narrowing with distance from the cylinder. As illustrated in Fig. 6, at the distal end portion of the second lid portion 12', there is a drain port 12'd created for draining the constant temperature water from the inside of the housing 9'. The drain port 12'd is a round opening and may have been created somewhere along the central axis of the cylinder 10'. From the drain port 12'd, a joint 12'e for detachably coupling a second constant temperature water supply tube 3a extends along the axial direction L. The joint 12'e has been formed in a cylindrical shape, and the inner surface or outer periphery of the joint 12'e has an internal screw or external screw 12'f (in Fig. 6, illustrated as an internal screw) formed thereon for the second constant temperature water supply tube 3a to be screwed thereinto or thereover. It should be noted that the coupling between the joint 12'e and the second constant temperature water supply tube 3a is not limited to screwing; for example, it may be achieved by interlocking.

As illustrated in Fig. 6, the side wall 10'c of the cylinder 10' has a suction port 10'g created for drawing gas from the inside of the housing 9' through it. The suction port 10'g is a round opening. The suction port 10'g may have been created closer to the second opening end portion 10'b than the middle in the direction L along the axis of the cylinder 10'. From the suction port 10'g, a joint 10'h for detachably coupling a suction tube 3b extends along the direction perpendicular to the axial direction L. The joint 10'h has been formed in a cylindrical shape, and the inner surface or outer periphery of the joint 10'h has an internal screw or external screw 10'i (in Fig. 6, illustrated as an internal screw) formed thereon for the suction tube 3b to be screwed thereinto or thereover. It should be noted that the coupling between the suction port 10'g and the suction tube 3b is not limited to screwing; for example, it may be achieved by interlocking.

Although not illustrated, furthermore, two or more suction ports 10'g may be provided to the side wall 10'c of the cylinder 10'. For example, second and subsequent ones may be created closer to the first opening end portion 10'a than the middle in the direction L along the axis of the cylinder 10', and the pressure reduction may be performed via multiple suction ports.

The materials for the housing 9', cylinder 10', first lid portion 11', and second lid portion 12' are the same as the materials for the housing 9, cylinder 10, first lid portion 11, and second lid portion 12, respectively, in the first embodiment.

Moreover, at a point closer to the first lid portion, a first membrane bundle end portion 8'a of the hollow fiber membrane bundle 8' has been fastened to the first opening end portion 10'a of the cylinder 10' by a potting portion 13', and at a point closer to the second lid portion, a second membrane bundle end portion 8'b of the hollow fiber membrane bundle 8' has been fastened to the second opening end portion 10'b of the cylinder 10' by a potting portion 14' .

The potting portions 13' and 14' are formed preferably of, for example, a product of the curing of a curable resin composition containing an epoxy resin or (meth)acrylic resin or a polyolefin resin, such as polyethylene or polypropylene, for manufacturability, chemical resistance, and pollution resistance reasons.

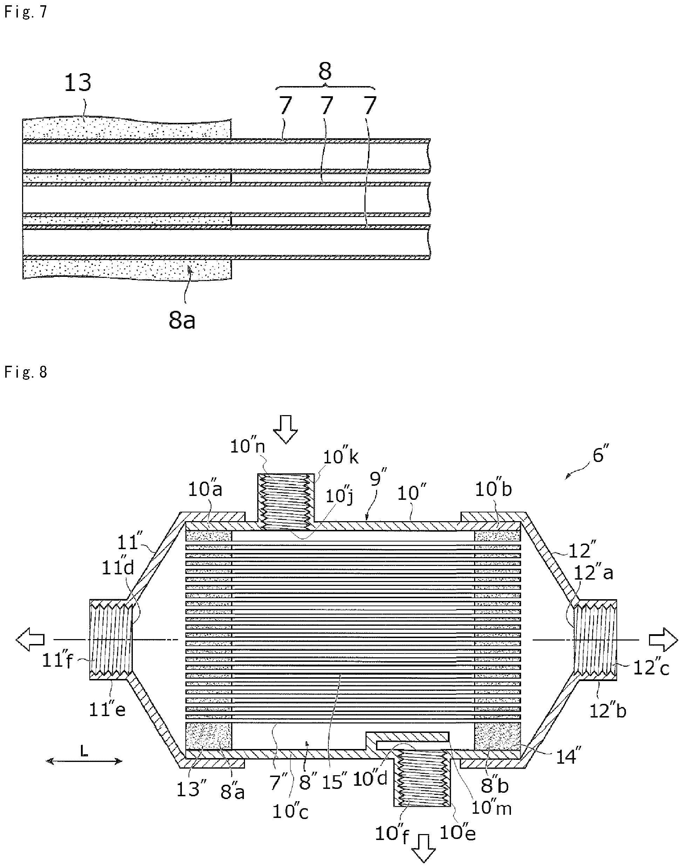

The potting portion 13' has been spread throughout the cross-section perpendicular to the direction L along the axis of the cylinder 10', excluding the inside of the hollow fiber membranes 7'. In other words, as illustrated in Fig. 7, the potting portion 13' has not been spread inside the hollow fiber membranes 7' and has been spread only between the hollow fiber membranes 7' and between the hollow fiber membrane bundle 8' and the inner wall of the cylinder 10'.

Like the potting portion 13', the potting portion 14' has also been spread throughout the cross-section perpendicular to the direction L along the axis of the cylinder 10', excluding the inside of the hollow fiber membranes 7'. In other words, in the same manner as in Fig. 5, the potting portion 14' has not been spread inside the hollow fiber membranes 7' and has been spread only between the hollow fiber membranes 7' and between the hollow fiber membrane bundle 8' and the inner wall of the cylinder 10'.

The constant temperature water supplied through the supply port 11'a into the first lid portion 11', therefore, is fed only to the inside of the hollow fiber membranes 7'. The constant temperature water supplied to the cylinder 10', furthermore, is prevented from flowing to the outside of the hollow fiber membranes 7'. Moreover, the pressure outside the hollow fiber membranes 7' is reduced through the drawing of gas through the suction port 10'g using a suction pump. Consequently, while the constant temperature water passes inside the hollow fiber membranes 7', dissolved gases and bubbles are extracted from the constant temperature water to the outside of the hollow fiber membranes 7', resulting in the degassing of the constant temperature water.

The degassed constant temperature water then flows through the drain port 12'd into the second constant temperature water supply tube 3a and is supplied through the second constant temperature water supply tube 3a into the reactor 5 within the (bio)chemical analysis section 4.

Overall, in the second embodiment, there is disclosed a case in which the portions that come into contact with constant temperature water in the hollow fiber degassing module are primarily the first lid portion 11', second lid portion 12', potting portion 13', potting portion 14', and hollow fiber membranes 7'. Using materials as specified above in these portions, furthermore, ensures that the hollow fiber degassing module will be superior in chemical resistance and allow for reduced contamination even in extended use in the degassing of the constant temperature water with it.

### (Third Embodiment Relating to a Hollow Fiber Degassing Module)

Fig. 8 is a schematic cross-sectional view of an external-perfusion hollow fiber degassing module according to the present invention and is a modified version of the first example. This external-perfusion hollow fiber degassing module 6", when configured as an external perfusion type, degasses constant temperature water by suppling the constant temperature water to the outside of hollow fiber membranes 7" and reducing the pressure inside the hollow fiber membranes 7" at the same time.

The hollow fiber membranes 7" and the hollow fiber membrane bundle 8" are similar to the hollow fiber membranes 7' and the hollow fiber membrane bundle 8', respectively, in the second embodiment. The hollow fiber membrane bundle 8" in the shape of a cylindrical roll, furthermore, may be supported by wrapping the outer periphery of its circumference with an external support 16 (e.g., Fig. 3) as mentioned by way of example in the first embodiment.

The housing 9" includes a cylinder 10", a first lid portion 11", and a second lid portion 12". The cylinder 10" is a section in which the hollow fiber membrane bundle 8" is housed. The cylinder 10" has been formed in a cylindrical shape extending in the axial direction L, and both end portions of the cylinder 10" are open. To a first opening end portion 10"a of the cylinder 10", which is the opening end portion on one side of the cylinder 10", the first lid portion 11" has been attached, and to a second opening end portion 10"b of the cylinder 10", which is the opening end portion on the other side, the second lid portion 12" has been attached. The attachment of the first lid portion 11" and the second lid portion 12" to the cylinder 10" can be achieved by, for example, screwing, interlocking, bonding, or welding.

The first lid portion 11" and the second lid portion 12" have each been formed in a tapered shape, narrowing with distance from the cylinder 10". At the distal end portion of the first lid portion 11" and the second lid portion 12", there are a suction port 11"d and a suction port 12"a, respectively, created for drawing gas from the inside of the hollow fiber membranes 7" through them. The suction port 11"d and the suction port 12"a are round openings and may have been created somewhere along the central axis of the cylinder 10". From the suction port 11"d and the suction port 12"a, a joint 11"e and a suction port 12"b for detachably coupling suction tubes (not illustrated) extend along the axial direction L. The joint 11"e and the joint 12"b have been formed in a cylindrical shape, and the inner surface or outer periphery of the joint 11"e and the joint 12"b has an internal screw 11"f and an internal screw 12"c or an external screw 11"f and an external screw "12c (in Fig. 8, illustrated as internal screws) formed thereon for the suction tubes 3b to be screwed thereinto or thereover. It should be noted that the coupling between the joint 11"e and the joint 12"b and the suction tubes is not limited to screwing; for example, it may be achieved by interlocking.

The shell 10" has a supply port 10"j created for supplying constant temperature water into the housing 9". For example, as illustrated in Fig. 8, the side wall 10"c of the shell 10" has a supply port 10"j created for supplying constant temperature water into the housing 9'. The supply port 10"j is a round opening. The supply port 10"j may have been created closer to the first opening end portion 10"a than the middle in the direction L along the axis of the cylinder 10". To the supply port 10"j, a joint 10"k for detachably coupling a first constant temperature water supply tube 1a extends along the direction perpendicular to the axial direction L. The joint 10"k has been formed in a cylindrical shape, and the inner surface or outer periphery of the joint 10"k has an internal screw or external screw 10"n (in Fig. 8, illustrated as an internal screw) formed thereon for the first constant temperature water supply tube 1a to be screwed thereinto or thereover. It should be noted that the coupling between the joint 10"j and the first constant temperature water supply tube 1a is not limited to screwing; for example, it may be achieved by interlocking.

As illustrated in Fig. 8, the side wall 10"c of the cylinder 10" has a drain port 10"d created for draining the constant temperature water from the inside of the housing 9". The drain port 10"d is a round opening. The drain port 10"d may have been created closer to the second opening end portion 10"b than the middle in the direction L along the axis of the cylinder 10". From the drain port 10"d, a joint 10"e for detachably coupling a second constant temperature water supply tube 3a extends along the direction perpendicular to the axial direction L. The joint 10"e has been formed in a cylindrical shape, and the inner surface or outer periphery of the joint 10"e has an internal screw or external screw 10"f (in Fig. 8, illustrated as an internal screw) formed thereon for the second constant temperature water supply tube 3a to be screwed thereinto or thereover. It should be noted that the coupling between the drain port 10"d and the second constant temperature water supply tube 3a is not limited to screwing; for example, it may be achieved by interlocking.

Moreover, as illustrated in Fig. 8, there may be a baffle 10"m set at the drain port 10"d, extending from the side wall 10"c of the shell 10". When a baffle 10"m is built, a gap can be left between it and the side wall 10"c, and, at the same time, an opening to this gap can be created only on the second opening end portion 10"b side so that the constant temperature water supplied through the supply port 10"j into the housing will come around to the drain port 10"d from the second opening end portion 10"b side. Such a baffle is preferably produced integrally with the shell 10" during the manufacture of the shell 10".

The materials for the housing 9", cylinder 10", first lid portion 11", and second lid portion 12" are the same as the materials for the housing 9, cylinder 10, first lid portion 11, and second lid portion 12, respectively, described in the first embodiment.

At a point closer to the first lid portion, furthermore, a first membrane bundle end portion 8"a of the hollow fiber membrane bundle 8" has been fastened to the first opening end portion 10"a of the cylinder 10" by a potting portion 13", and at a point closer to the second lid portion, a second membrane bundle end portion 8"b of the hollow fiber membrane bundle 8" has been fastened to the second opening end portion 10"b of the cylinder 10" by a potting portion 14".

The materials for the potting portions 13" and 14" are similar to those for the potting portions 13 and 14 described in the first embodiment.

The potting portion 13" has been spread throughout the cross-section perpendicular to the direction L along the axis of the cylinder 10", excluding the inside of the hollow fiber membranes 7". In other words, in the same manner as in Fig. 7, the potting portion 13" has not been spread inside the hollow fiber membranes 7" and has been spread only between the hollow fiber membranes 7" and between the hollow fiber membrane bundle 8" and the inner wall of the cylinder 10".

Like the potting portion 13", the potting portion 14" has also been spread throughout the cross-section perpendicular to the direction L along the axis of the cylinder 10", excluding the inside of the hollow fiber membranes 7". In other words, in the same manner as in Fig. 5, the potting portion 14" has not been spread inside the hollow fiber membranes 7" and has been spread only between the hollow fiber membranes 7" and between the hollow fiber membrane bundle 8" and the inner wall of the cylinder 10".

The constant temperature water supplied through the supply port 10"j into the housing 9", therefore, is fed only to the outside of the hollow fiber membranes 7". The constant temperature water supplied to the cylinder 10", furthermore, is prevented from flowing to the inside of the hollow fiber membranes 7", the first lid portion 11", and the second lid portion 12". Moreover, the pressure inside the hollow fiber membranes 7" is reduced through the drawing of gas through the suction port 11"d and the suction port 12"a using suction pumps. Consequently, while the constant temperature water passes outside the hollow fiber membranes 7", dissolved gases and bubbles are extracted from the constant temperature water to the inside of the hollow fiber membranes 7", resulting in the degassing of the constant temperature water.

The degassed constant temperature water then flows through the drain port 10"d into the second constant temperature water supply tube 3a and is supplied through the second constant temperature water supply tube 3a into the reactor 5 within the (bio)chemical analysis section 4.

Overall, in the third embodiment, there is disclosed a case in which the portions that come into contact with constant temperature water in the hollow fiber degassing module are primarily the shell 10", potting portion 13", potting portion 14", and hollow fiber membranes 7". Using materials as specified above in these portions, furthermore, ensures that the hollow fiber degassing module will be superior in chemical resistance and allow for reduced contamination even in extended use in the degassing of the constant temperature water with it.

An embodiment of an automatic analysis device to which the present invention is applied will now be described.

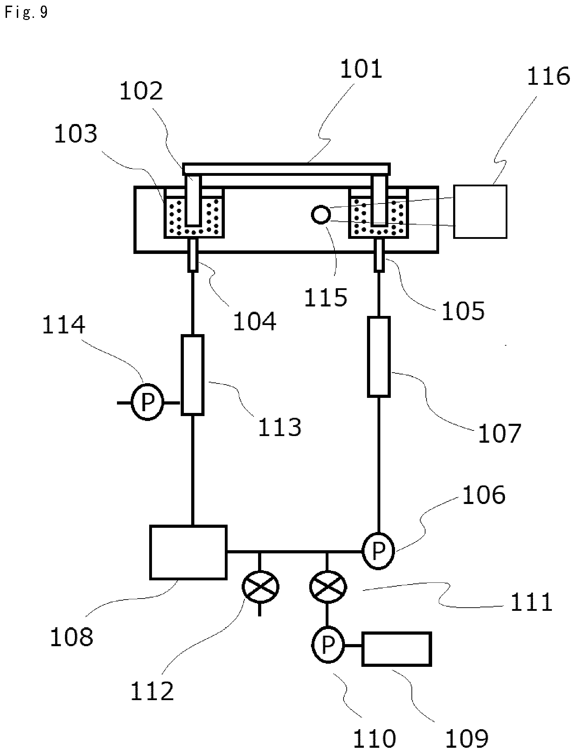

Fig. 9 is a block diagram illustrating an embodiment of a hot-water circulating reactor in an automatic analysis device to which the present invention is applied. The reaction vessel 102, attached to the circumference of a round reaction disk 101, has been immersed in a liquid retained in a similarly round reactor 103. The liquid in the reactor is in continuous circulation with a circulation pump 106 installed between a drainpipe 104 and a supply pipe 105, and its temperature is being regulated through on/off control of a heater 107. By doing this, the device is maintaining reaction solution retained inside the reaction vessel 102 at an optimum temperature for reaction (e.g., 37°C). Additionally, a cooling unit 108 may be installed for cooling the constant temperature water in the reactor in the event of too high a temperature of the constant temperature water. In the hot-water circulation channel, the supply of purified water from a feed water tank 109 is being controlled by a feed water pump 110 and a feed water valve 111. The hot-water circulation channel is also equipped with a waste fluid valve 112, through which the device discharges the constant temperature water circulating through the reactor out of the channel during the replacement of the high temperature water. There is, furthermore, a degasser 113 in the channel through which the constant temperature water in the reactor is circulated, and dissolved gases in the constant temperature water supplied into the degasser are removed through the operation of a vacuum pump 114.

Through the reaction solution retained in the reaction vessel 102, which is a mixture of a sample and a reagent, a beam of light emitted from a light source lamp 115 passes. By measuring the transmitted light using a multiwavelength photometer 116, qualitative/quantitative analysis of a specific constituent in the sample is conducted.

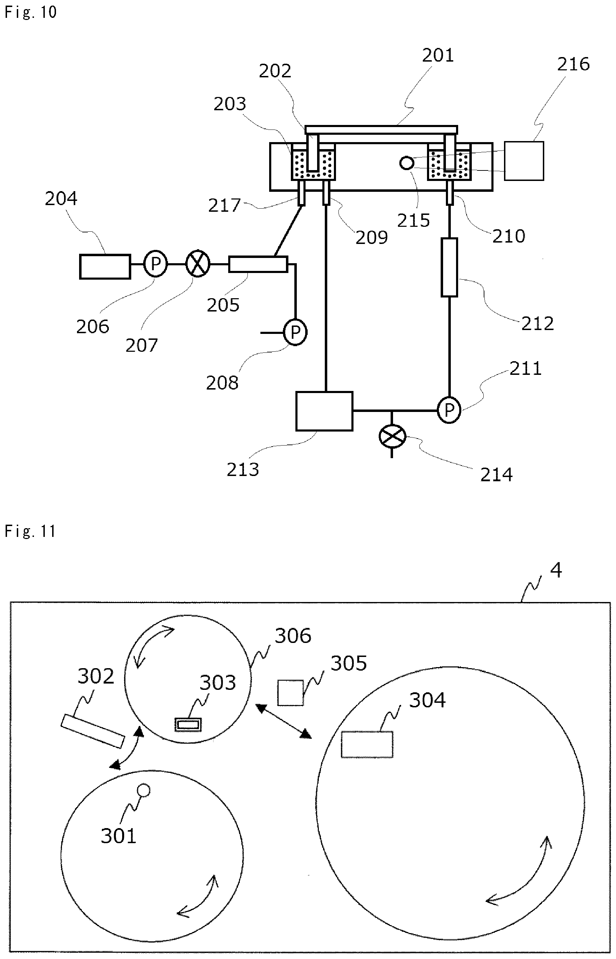

A block diagram illustrating an embodiment of a hot-water circulating reactor in an automatic analysis device to which the present invention is applied will now be presented in Fig. 10. The reaction vessel 202, attached to the circumference of a round reaction disk 201, has been immersed in constant temperature water retained in a similarly round reactor 203. The reactor 203 is supplied with constant temperature water from a feed water tank 204. There is a degasser 205 in the channel between the feed water tank 204 and the reactor 203, and the supply of constant temperature water is being controlled by a feed water pump 206 and a feed water valve 207. Dissolved gases in the constant temperature water supplied into the degasser 205 are removed through the operation of a vacuum pump 208, and degassed constant temperature water is supplied through a supply pipe 217 to the reactor 203.

Meanwhile, the constant temperature water in the reactor is in continuous circulation with a circulation pump 211 installed between a drainpipe 209 and a supply pipe 210, and its temperature is being regulated through on/off control of a heater 212. By doing this, the device is maintaining reaction solution retained inside the reaction vessel 202 at an optimum temperature for reaction (e.g., 37°C). Additionally, a cooling unit 213 may be installed for cooling the constant temperature water in the reactor in the event of too high a temperature of the constant temperature water. The hot-water circulation channel is also equipped with a waste fluid valve 214, through which the device discharges the constant temperature water circulating through the reactor out of the channel during the replacement of the constant temperature water.

Through the reaction solution retained in the reaction vessel 202, which is a mixture of a sample and a reagent, a beam of light emitted from a light source lamp 215 passes. By measuring the transmitted light using a multiwavelength photometer 216, qualitative/quantitative analysis of a specific constituent in the sample is conducted.

Alternatively, an automatic analysis device of the present invention may include a specimen container 301, a specimen dispenser 302, a reaction vessel 303, a reagent container 304, and a reagent dispenser 305 as illustrated in Fig. 11. For example, a specimen transferred from the specimen container 301 to the reaction vessel 303 via the specimen dispenser 302 and a reagent transferred from the reagent container 304 to the reaction vessel 303 via the reagent dispenser 305 can be mixed/stirred. The reaction vessel 303 is maintained at a constant temperature by constant temperature water stored in a reactor 306. An automatic analysis device of the present invention, furthermore, may include a control section (not illustrated) composed of components such as an information processor including a CPU/memory/I/O peripherals, a microcontroller, a latch, etc., and automatic analysis and diagnostic programs and data stored in the memory. Using these, the automatic analysis device can process or centrally control, at the CPU, information required for its overall operation or analytical operations.

### EXAMPLES

In the following manufacturing example, preparation example, example, and comparative example, "parts" and "%" are "parts by mass" and "% by mass" unless specifically stated otherwise. The methods for each measurement are as follows.

### (EXAMPLE)

Types of tests were performed using "SEPAREL EF-040" (manufactured by DIC Corporation), which has a structure similar to that of the external-perfusion degassing module illustrated in Fig. 2.

That is, the hollow fiber degassing module 6 includes at least a cylinder 10, a first lid portion 11, a second lid portion 12, a hollow fiber membrane bundle 8 in which multiple hollow fiber membranes 7 have been bundled with the warp, and potting portions 13 and 14 that seal the end portions of the hollow fiber membrane bundle. The material for the shell 10 is a polypropylene resin, the material for the lid portions 11 and 12 is a polypropylene resin, and the material for the hollow fiber membranes 7 is a poly(4-methylpentene-1) resin. The material for the warp is a polyethylene terephthalate resin, and the potting portions 13 and 14 are products of the curing of a curable resin composition containing an epoxy resin.

### (COMPARATIVE EXAMPLE)

Types of tests were performed using "NAGASEP M60-4500X100C" (manufactured by Eiryu Co., Ltd.), which has a structure similar to that of the external-perfusion degassing module illustrated in Fig. 2. The degassing module 6 includes at least a cylinder 10, a first lid portion 11, a second lid portion 12, a hollow fiber membrane bundle 8 in which multiple hollow fiber membranes 7 have been bundled with the warp, and potting portions 13 and 14 that seal the end portions of the hollow fiber membrane bundle. The material for the shell 10 is a polycarbonate resin, the material for the lid portions 11 and 12 is a polycarbonate resin, and the material for the hollow fiber membranes 7 is a silicone resin. The material for the warp is a PET resin, and the potting portions 13 and 14 are made of a silicone resin.

### (Chemical Resistance Test)

Using the hollow fiber degassing modules in the Example and Comparative Example, the joint 12b was stoppered with a polypropylene resin cap to prevent the entry of chemical solution into the gas-phase compartment of the module. The joint 10e, furthermore, was stoppered with a polypropylene resin cap, and the chemical solution specified in Table 1 was introduced through the supply port 11a to fill the liquid-phase compartment of the module with the chemical solution. After a certain period of time was allowed to pass at room temperature, the chemical solution was removed. The module was disassembled, and 50 mm of the portion of the hollow fiber membranes 7 extending inward from the potting portions 13 and 14 was cut out (in such a manner that the midpoint between one potting portion and the other would be the midpoint of the cutout). The tensile strength per string of the cut pieces of the hollow fiber membranes 7 was measured (using TENSILON "RTG-1225 testing machine," manufactured by A&D Co., Ltd., at a distance between chucks of 30 mm and a test speed of 50 mm/min, and with the maximum point load = tensile strength), and the number average from twenty samples was calculated. Separately, using the same type of module that had yet to be subjected to the immersion, the tensile strength of pieces of the hollow fiber membranes 7 cut out in the same manner as described above was measured and calculated as the tensile strength before immersion. The proportion (%) of the tensile strength after a certain period of immersion (load) to the tensile strength before the immersion (initial load) was calculated and is presented in Table 1.

### (Pollution Resistance Test)

Using the hollow fiber degassing modules in the Example and Comparative Example, the joint 12b was stoppered with a polypropylene resin cap to prevent the entry of chemical solution into the gas-phase compartment of the module. The joint 10e, furthermore, was stoppered with a polypropylene resin cap, and a 5% aqueous solution of hypochlorous acid was introduced as chemical solution through the supply port 11a to fill the liquid-phase compartment of the module. After two weeks passed at room temperature, the chemical solution was removed, and a COD Packtest (manufactured by Kyoritsu Chemical-Check Lab., Corp.) was performed. The results are presented in Table 1.

**[Table 1]**

| | Chemical resistance test, load/initial load (%) | | | COD Packtest |
|---|---|---|---|---|
| | Aqueous solution of hypochlorous acid (50 ppm, 1 month) | Oxygenated water (3%, 1 month) | Sodium hydroxide (30%, 2 weeks) | |
| Example | 100 | 100 | 100 | 0 ppm |
| Comparative Example | 82 | 87 | 33 | 20 ppm or more |

From these results, it was revealed that the external-perfusion degassing module in the Example is immune to washing with an aqueous solution of hypochlorous acid, oxygenated water, and sodium hydroxide with its superior chemical resistance, and that the module in the Example withstands extended use of chemical solution and is unlikely to become polluted with its superior pollution resistance. It was revealed that the external-perfusion degassing module in the Comparative Example, by contrast, is vulnerable to washing with an aqueous solution of hypochlorous acid, oxygenated water, and sodium hydroxide with its inferior chemical resistance, and that the module in the Comparative Example cannot withstand extended use of chemical solution and is likely to become polluted with its inferior pollution resistance.

### Reference Signs List

1 ... Purified water generator, 1a ... channel (first constant temperature water supply tube), 2 ... automatic analysis device, 3 ... degasser, 3a ... channel (second constant temperature water supply tube), 4 ... (bio)chemical analysis section, 5 ... reactor (constant temperature tank), P ... vacuum pump (suction pump), 3b ... suction tube, 6 ... hollow fiber degassing module, 7 ... hollow fiber membrane, 8 ... hollow fiber membrane bundle, 8a ... first membrane bundle end portion, 8b ... second membrane bundle end portion, 8c ... membrane bundle hollow portion, 9 ... housing, 10 ... cylinder, 10a ... first opening end portion, 10b ... second opening end portion, 10c ... side wall, 10d ... drain port, 10e ... joint, 10f ... internal screw, 11 ... first lid portion, 11a ... supply port, 11b ... joint, 11c ... internal screw, 12 ... second lid portion, 12a .. suction port, 12b ... joint, 12c ... internal screw, 13 ... potting portion, 13a ... communication port, 14 ... potting portion, 16 ... external support, 17 ... water-permeable pore, 6' ... hollow fiber degassing module, 7' ... hollow fiber membrane, 8' ... hollow fiber membrane bundle, 8'a ... first membrane bundle end portion, 8'b ... second membrane bundle end portion, 9' ... housing, 10' ... cylinder, 10'a ... first opening end portion, 10'b ... second opening end portion, 10'c ... side wall, 10'g ... suction port, 10'h ... joint, 10'i ... internal screw, 11' ... first lid portion, 11'a ... supply port, 11'b ... joint, 11'c ... internal screw, 12' ... second lid portion, 12'd ... drain port, 12'e ... joint, 12'f ... internal screw, 13' ... potting portion, 14' ... potting portion, 6" ... hollow fiber degassing module, 7" ... hollow fiber membrane, 8" ... hollow fiber membrane bundle, 8"a ... first membrane bundle end portion, 8"b ... second membrane bundle end portion, 9" ... housing, 10" ... cylinder, 10"a ... first opening end portion, 10"b ... second opening end portion, 10"c ... side wall, 10"d ... drain port, 10"e ... joint, 10"f ... internal screw, 10"j ... supply port, 10"k ... joint, 10"n ... internal screw, 11" ... first lid portion, 11"d ... suction port, 11"b ... joint, 11"c ... internal screw, 12" ... second lid portion, 12"a ... suction port, 12"b ... joint, 12"c ... internal screw, 13" ... potting portion, 14" ... potting portion,
101 ... reaction disk, 102 ... reaction vessel, 103 ... reactor, 104 ... drainpipe, 105 ... supply pipe, 106 ... circulation pump, 107 ... heater, 108 ... cooling unit, 109 ... feed water tank, 110 ... feed water pump, 111 ... feed water valve, 112 ... waste fluid valve, 113 ... light source lamp, 114 ... multiwavelength photometer, 115 ... degasser, 116 ... vacuum pump, 201 ... reaction disk, 202 ... reaction vessel, 203 ... reactor, 204 ... feed water tank, 205 ... degasser, 206 ... feed water pump, 207 ... feed water valve, 208 ... vacuum pump, 209 ... drainpipe, 210 ... supply pipe, 211 ... circulation pump, 212 ... heater, 213 ... cooling unit, 214 ... waste fluid valve, 215 ... light source lamp, 216 ... multiwavelength photometer, 301 ... specimen container, 302 ... specimen dispenser, 303 ... reaction vessel, 304 ... reagent container, 305 ... reagent dispenser, 306 ... reactor

## Claims

1. An automatic analysis device that carries out chemical analysis or biochemical analysis of a specimen, the device comprising:
a constant temperature tank for maintaining a test tube containing the specimen within a certain temperature range and a degassing portion including a hollow fiber degassing module for removing a dissolved gas contained in constant temperature water in the constant temperature tank, wherein:
the hollow fiber degassing module includes at least one hollow fiber membrane; and
a material for the hollow fiber membrane is a polyolefin resin or fluoropolymer.

2. The automatic analysis device according to Claim 1, wherein:
the hollow fiber membrane is a plurality of hollow fiber membranes bundled with a warp, and a material for the warp is a polyolefin resin or aromatic polyester resin.

3. The automatic analysis device according to Claim 1 or 2, wherein:
the hollow fiber degassing module further includes at least a housing and potting portions that seal end portions of a bundle of the hollow fiber membrane;
a material for the housing is a polyolefin resin or aromatic polyester resin; and
at least a portion of the potting portions that comes into contact with the water is sealed with a product of curing of a curable resin composition containing an epoxy resin.

4. A hollow fiber degassing module included in an automatic analysis device that carries out chemical analysis or biochemical analysis of a specimen and
used exclusively to remove a dissolved gas contained in constant temperature water in a constant temperature tank for maintaining a test tube containing the specimen within a certain temperature range, wherein:
the hollow fiber degassing module includes at least one hollow fiber membrane; and
a material for the hollow fiber membrane is a polyolefin resin or fluoropolymer.

5. A method for removing, in an automatic analysis device that carries out chemical analysis or biochemical analysis of a specimen,
a dissolved gas contained in constant temperature water in a constant temperature tank for maintaining a test tube containing the specimen within a certain temperature range, wherein:
the hollow fiber degassing module includes at least one hollow fiber membrane; and
a material for the hollow fiber membrane is a polyolefin resin or fluoropolymer.
